# EUROPEAN PATENT SPECIFICATION

(11) **EP 3 495 793 B1**
(45) Date of publication and mention of the grant of the patent: **03.08.2022**
(21) Application number: 17425123.1
(22) Date of filing: 07.12.2017
(51) Int. Cl.: G01L 5/00, E05F 15/41, E05F 15/48

(54) **TEST METHOD FOR CHECKING THE ANTI-PINCHING FUNCTION OF A MOTORIZED WINDOW LIFTER DEVICE AND MEASUREMENT ASSEMBLY FOR IMPLEMENTING THIS METHOD**
TESTVERFAHREN ZUR PRÜFUNG DER KLEMMSCHUTZFUNKTION EINER MOTORISIERTEN FENSTERHEBERVORRICHTUNG UND MESSANORDNUNG ZUR DURCHFÜHRUNG DIESES VERFAHRENS
PROCÉDÉ DE TEST POUR VÉRIFIER LA FONCTION DE ANTI-PINCEMENT D'UN DISPOSITUF DE LÈVE-VITRE MOTORISÉ ET ENSEMBLE DE MESURE POUR LA MISE EN OEUVRE DE CE PROCÉDÉ

(43) Date of publication of application: 12.06.2019
(73) Proprietor: FCA Italy S.p.A., 10135 Torino (IT)
(72) Inventor: MANASSERO, Stefano, 10135 Torino (IT)
(74) Representative: Lovino, Paolo

(56) References cited:
- US-A1- 2004 130 285
- US-A1- 2010 174 447
- Drivetest: "Pinch Force Measurement System for PWL Applications Safety ensured by Pinch Force Measurement", , 4 February 2017 (2017-02-04), XP055478163, Retrieved from the Internet: URL:https://www.drivetest.de/wp-content/up loads/2017/02/DT_Produktblatt_FM205_EN_Web _V4.0.pdf [retrieved on 2018-05-24]

## Description

The present invention relates to a test method for checking the anti-pinching function of a motorized window lifter device for a motor vehicle.

As already known, in most vehicles, the movement of the windows is semi-automatically controlled by means of electrically powered window lifter devices.

These window lifter devices usually have an anti-pinching function to increase the safety of any children on board the motor vehicle, namely they automatically reverse the direction of movement of the window glass if this latter pinches an obstacle.

To implement this function, the aforementioned motorized window lifter devices have a sensor detecting the power absorbed by the motor and the speed of the window glass in order to carry out the aforementioned inversion when the values of absorbed power and speed reach a maximum threshold.

Some safety regulations provide the vehicle manufacturers with guidelines for testing the device before the actual sale of the vehicle.

According to these regulations, a positive test result is obtained when the direction of movement is reversed before the pinching force exerted on the obstacle exceeds 100 N, when the height of the opening that separates the window glass from an upper frame sealing element, defining the relative window, is between 4 mm and 200 mm.

During testing, the obstacle is substantially defined by a metal bar with a circular cross-section, which is arranged through the aforesaid opening so that it impacts against said sealing element due to the lifting of the glass.

Document XP055478163 "Pinch Force Measurement System for PWL Applications Safety ensured by Pinch Force Measurement" (DriveTest GmbH) discloses a measurement assembly for checking the pinching force of a motorized window regulator according to the state of the art.

Aiming to follow as much as possible the aforesaid regulations, there is the need to test the window regulator to check whether the inversion takes place correctly, both when the height of the aforesaid opening is about 200 mm and when it is about 4 mm.

The pinching force can be easily measured in the first case, whereas in the second case the measurement is difficult due to the narrowness of the opening.

The object of the present invention is to provide a test method for checking the anti-pinching function of motorized window lifter devices, which allows overcoming the aforesaid problem in a simple and inexpensive way, in particular deviating as little as possible from the test directives indicated by the regulations.

The present invention provides a test method for checking the anti-pinching function of a motorized window lifter device as defined in claim 1.

The present invention also relates to a measurement assembly for checking the anti-pinching function of a motorized window lifter device.

The present invention provides a measurement assembly for checking the anti-pinching function of a motorized window lifter device as defined in claim 2.

The invention will now be described with reference to the accompanying drawings showing a non-limiting embodiment, in which:
- Figure 1 shows, partially and in perspective, a door of a motor vehicle and a measurement assembly during the test method for checking the anti-pinching function of a motorized window lifter device according to a preferred embodiment of the present invention;
- Figure 2 is a perspective view from above, on an enlarged scale, of a component of the measurement assembly shown in Figure 1;
- Figure 3 is a front perspective view of the component of Figure 2;
- Figure 4 is analogous to Figure 1 and shows a measurement step during the test method of the present invention.

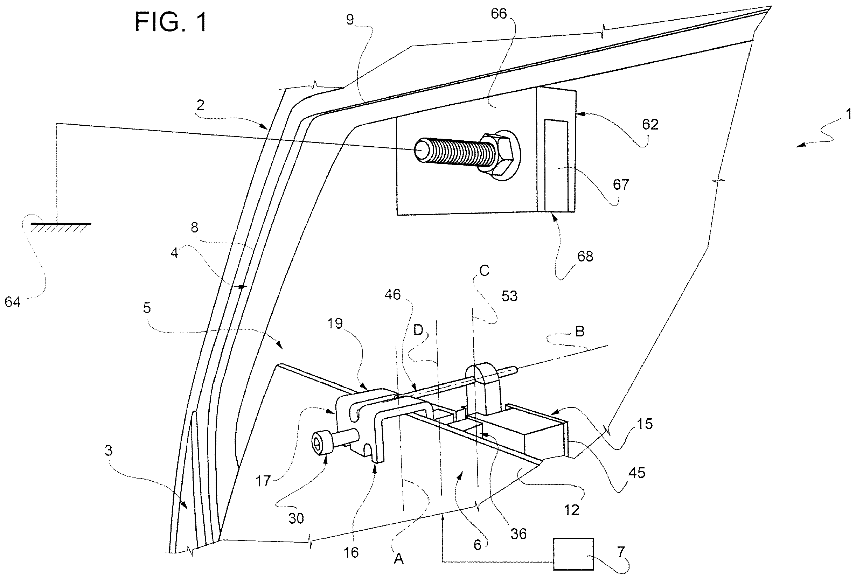

In Figure 1, the reference number 1 indicates, as a whole, a measurement assembly (partially shown) installed on a door 2 for motor vehicles.

The door 2 includes a frame 3; a plurality of sealing elements defining the contour 4 of a window 5; a glass 6, movable with respect to the frame 3 to open/close the window 5; and a motorized window lifter device 7 (schematically shown and not described in detail) controlled to move the glass 6.

In particular, the contour 4 is defined by two sealing elements 8 on the side edges of the window 5, only one of which is visible in Figure 1; by an upper sealing element 9; and by a lower sealing element (not shown), spaced from the upper sealing element 9 along a substantially vertical direction A, coinciding with the direction of movement of the glass 6. The glass 6 is guided along the direction A in a known manner, not described in detail, e.g. by means of guides (known and not shown) provided inside the frame 3. In particular, when the window 5 is completely closed, the glass 6 is in a closed end position, in which an upper end portion 12 of the glass 6 engages the upper sealing element 9.

The window lifter device 7 has an anti-pinching function, namely it automatically reverses the direction of movement of the glass 6 when an obstacle hinders its lifting, before the portion 12 meets the upper sealing element 9.

The assembly 1 is provided for testing such anti-pinching function. More particularly, the assembly 1 is provided for detecting an impact force exerted on a test obstacle in order to check whether such impact force is lower than a predetermined threshold, e.g. a threshold of 100 N. According to an aspect of the present invention, the assembly 1 comprises a sensor device 15 and a connecting structure 16 adapted to be connected in a fixed position with respect to the glass 6 during the test.

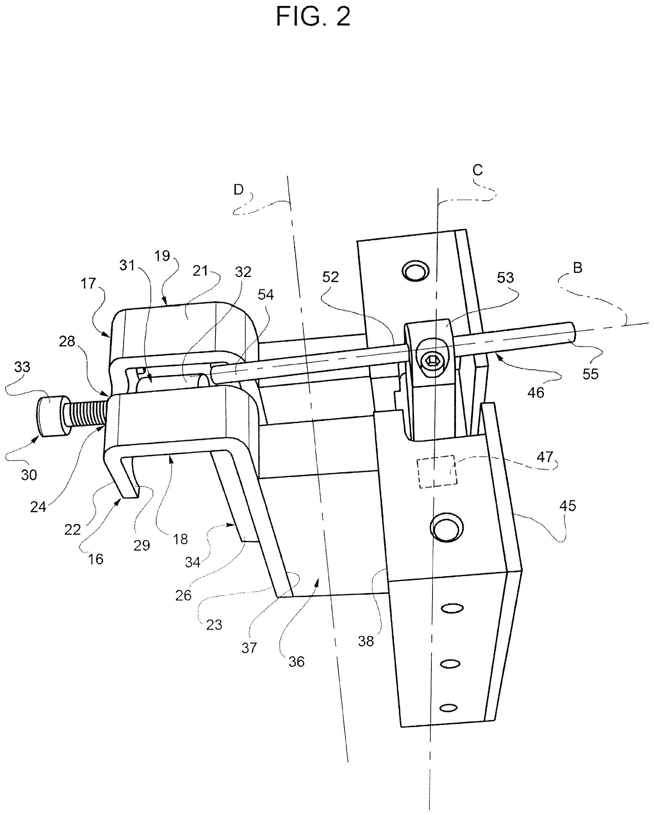

The structure 16 comprises an attachment member 17 defining a seat 18 facing downwards to house a section of the end portion 12. Referring to the particular example shown in Figure 2, the attachment member 17 comprises a plate 19 comprising in turn:
- an intermediate portion 21, preferably having a thickness of 4 mm, which extends along a direction B, transverse to the direction A, so as to cross the window 5 above the end portion 12 when the attachment member 17 is mounted on the glass 6; and
- two portions 22, 23, parallel to the direction A and connected to the opposite ends of the portion 21 so as to be arranged on opposite sides of the end portion 12 when the attachment member 17 is mounted on the glass 6.

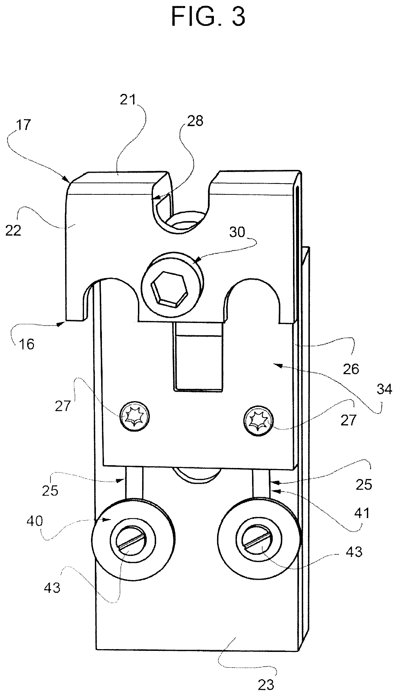

In particular, as shown in Figure 2, the portion 22 has a smaller height with respect to the portion 23 and is arranged, during the test, in front of an outer face of the glass 6. Even more preferably, the portion 22 has a threaded hole 24 whose axis is parallel to the direction B. According to an alternative not shown, the portion 22 is arranged in front of an inner face of the glass 6. Referring now to Figure 3, the portion 23 advantageously has a pair of slots 25 parallel to the direction A. Conveniently, the attachment member 17 comprises a plate 26, which is made of a material less rigid than the one of the plate 19, is in contact with the portion 23, is fastened to this latter, in particular by means of mordant screws 27, and rests against the inner face of the glass 6 when the structure 16 is mounted on the portion 12. According to the aforesaid alternative not shown, the plate 26 rests against the outer face of the glass 6.

Preferably, the attachment member 17 has a vertical slit 28, which is formed in the portion 21 and in an upper part of the portion 23. In particular, the slit 28 is also formed in an upper part of the portion 22.

In particular, the plate 26 and the portions 21 and 22 define, together, an attachment portion 29 shaped as an inverted U, delimiting the seat 18 and arranged astride the portion 12 when the attachment member 17 is mounted on the glass 6.

The attachment member 17 further comprises a releasable fastening device 30 for fastening the portion 12 in the seat 18. Conveniently, the device 30 is defined by a vice 31, comprising for example a pressure element 32 arranged in the seat 18 and a screw 33, which is screwed into the hole 24 and carries the pressure element 32 at one of its ends. By screwing the screw 33 when the attachment member 17 is mounted on the glass 6, the pressure element 32 comes into contact with the outer face of the glass 6 and the portion 12 is clamped between the pressure element 32 and a face 34 of the plate 26.

Moreover, the structure 16 comprises a spacer 36 arranged between the portion 23 and the device 15 and having a pair of attachment portions 37, 38, which are mutually opposite in a direction parallel to the direction B.

The portion 37 is in contact with the portion 23, preferably in an adjustable position along a direction parallel to the direction A. In particular, this position is adjusted by an adjustment device 40 comprising a guide 41 and at least one fastening element 43, which is movable between a release position and a locking position for releasably securing the portion 37 to the portion 23, and is slidable along the guide 41 when released. Specifically, the guide 41 is defined by the two slots 25, while two screw-type fastening elements 43 pass through the slots 25 and are screwed to the portion 37.

Referring to Figures 1 and 3, the device 15 comprises a support body 45, which is fastened to the attachment portion 38 and is arranged out of the window 5; and a sensitive element 46, which is coupled to the body 45 so as to be movable along a direction C, parallel to the direction A and spaced from this latter along the direction B, in response to an impact force acting on the same element 46.

It is hereby specified that, here and in the following, the statement that a component is arranged "out of the window 5" indicates that the component does not engage the window 5, i.e. it is indiscriminately arranged on the inner or on the outer part of the window 5.

The device 15 comprises a force transducer 47, schematically shown and comprising e.g. a pair of preloaded springs. The transducer 47 is arranged in the support body 45 and provides a signal indicative of the impact force based on the displacement of the element 46.

Conveniently, the sensitive element 46 is defined by a bar with a circular section, advantageously having a diameter equal to the thickness in height of the portion 21, namely a diameter of 4 mm, arranged above the support body 45, preferably perpendicular to the direction C and comprising an intermediate portion 52. This latter is fixed to a rod 53, which extends along the direction C, is slidable in the body 45 along the direction C and acts on the transducer 47. The portion 52 preferably has an enlarged diameter with respect to the remaining part of the bar, to improve the fastening conditions to the rod 53.

The bar is aligned with the slit 28 and comprises two opposite ends 54, 55, of which the end 54 can engage the slit 28 with a certain clearance, for example when the rod 53 slides towards the inside of the support body 45, i.e. when the bar approaches the spacer 36.

According to a further aspect of the present invention, the assembly 1 further comprises an abutment element 62, which is arranged in a fixed position with respect to the frame 3 and is aligned with the element 46 along a direction D parallel to the direction C such to define the aforementioned test obstacle.

Preferably, the abutment element 62 has an adjustable position and, for example, is supported by a pedestal 64, schematically shown. The way of fixing the abutment element 62 and the position of the latter element 62 may obviously be different from what shown by way of example.

Even more preferably, the abutment element 62 is arranged in contact with the upper sealing element 9.

According to a further preferred aspect of the present invention, the element 62 comprises a body 66 and a coating element 67, which is applied to the body 66 and is preferably defined by a strip of adhesive tape.

The element 67 defines an abutment face 68, which is aligned with the element 46 along the direction D such to be impacted by the element 46 during the lifting of the glass 6. On the other hand, the element 46 is coated with a marking material, suitably chalk dust, whose colour differs from the one of the abutment face 68.

This material leaves a visible mark on the abutment face 68 when the sensitive element 46 impacts the abutment element 62.

During the test, the device 7 is controlled to lift the glass 6 along the direction A, starting from a partially open position of the window 5, towards the aforementioned closed position.

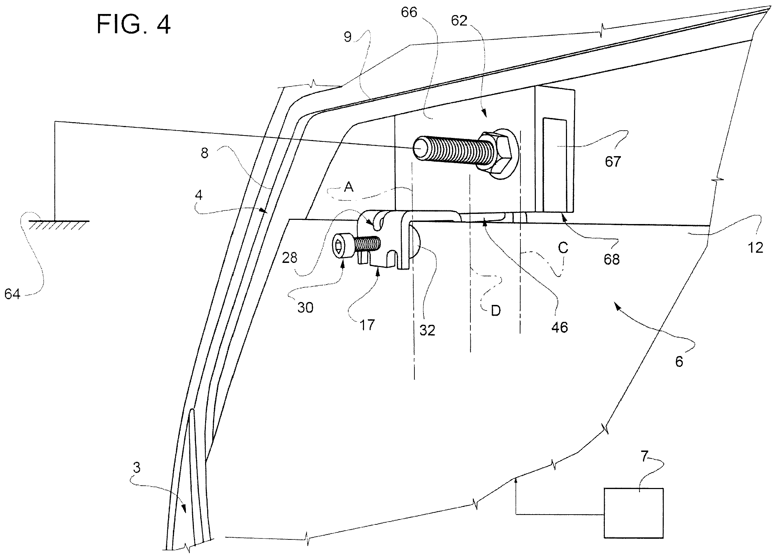

As shown in Figure 4, before reaching this closed position, the sensitive element 46 impacts the test obstacle defined by the element 62. This impact hinders the translation of the glass 6, thus activating the anti-pinching function of the device 7. Upon impacting and reversing the direction of movement of the glass 6, the sensitive element 46 receives an impact force, which is directed in the direction D and is equal to the pinching force that the glass 6 would have exerted along the direction A on a hypothetical obstacle occupying the window 5.

The impact force pushes the sensitive element 46 downwards, thus causing the movement of the rod 53 along the direction C. Hence, the force transducer 47 emits a signal based on the displacement of the rod 53. The signal is indicative of the impact force, so the force transducer 47 allows the measurement of the impact force.

This measurement allows checking whether the corresponding pinching force is below the threshold established by the regulations such to validate the operation of the device 7. The advantages of the aforesaid test method and assembly 1 are evident from the foregoing.

Thanks to the fact that the sensitive element 46, and more generally the whole sensor device 15, are movable together with the glass 6, the test conditions are extremely flexible.

In particular, the window 5 is engaged only by the portion 21, which has a relatively low thickness, whereas the device 15 is arranged in a different spatial region, which allows a free movement of the sensitive element 46 and of the rod 53, regardless of the distance between the end portion 12 and the upper sealing element 9.

In this way, the measurement of the pinching force can be performed in a simple, though indirect, way. In particular, the test method simulates the pinching force in the required conditions providing a distance equal to 4 mm between the end portion 12 and the upper sealing element 9: in fact, the abutment element 62 simulates a sealing portion like the upper sealing element 9, whereas the distance between the end portion 12 and the abutment element 62 is equal to 4 mm when the sensitive element 46 impacts the abutment face 68.

Moreover, thanks to the presence of the slit 28, the bar defining the sensitive element 46 can move downwards without entering into contact with the connecting structure 16.

Besides being arranged out of the window 5 as well, the abutment element 62 provides an obstacle or an impact surface, which is even and effectively simulates the upper sealing element 9.

The use of the coating element 67 and of the aforementioned marking material allows, by observing the aforesaid mark, checking whether during the test the inversion of the direction of movement of the glass 6 has actually been caused by an impact between the sensitive element 46 and the abutment face 68.

Moreover, the adjustment device 40 and the use of the spacer 36, which can be easily replaced or removed, considerably increase the versatility of the assembly 1. Finally, it is evident to those skilled in the art how modifications and variations can be made to the assembly 1 or to the test method described above without thereby departing from the protective scope defined by the appended claims.

For example, the attachment member 17 may have shapes and/or structures different from those described and shown. For example, the attachment member 17 may consist of a device provided with suction cups.

Analogously, the abutment element 62 may have shapes and/or structures different from those described and shown. For example, the abutment element 62 may have a rounded shape to simulate or adapt to particular shapes of the upper sealing element 9.

The adjustment device 40 could be missing or different from the one shown in the attached figures (for example, the guide 41 could be carried by the portion 38 or by the body 45, instead of the portion 23).

## Claims

1. A test method for checking the anti-pinching function of a motorized window lifter device (7) of a motor vehicle, the method comprising the following steps:
- controlling said motorized window lifter device (7) to move a glass (6) along a movement direction (A) towards a closed position, in which said glass (6) completely closes a window (5) of said motor vehicle, said window lifter device (7) being adapted to automatically reverse the translation direction when the movement of said glass (6) is hindered before it reaches said closed position;
- hindering the translation of said glass (6) towards said closed position by means of a test obstacle (62); and
- measuring by means of a sensor device (15) an impact force exerted on said test obstacle (62) at the moment of the reversing of the translation direction; wherein said sensor device (15) is fastened to said glass (6) and said test obstacle comprises an abutment element (62), which is arranged in a fixed position and is aligned with respect to said sensor device (15) along an impact direction (D) parallel to said direction of movement (A) such to be impacted by said sensor device (15) during the translation of said glass (6) towards said closed position;
**characterized in that** said sensor device (15) is arranged completely out of the path followed by said glass (6) in said window (5).

2. A measurement assembly (1) for checking the anti-pinching function of a motorized window lifter device (7) according to the test method of claim 1, the assembly comprising a sensor device (15) comprising:
- a support body (45);
- a sensitive element (46) which is coupled to said support body (45) so as to be movable along a direction of detection (C) in response to an impact force acting on said sensitive element (46) parallel to said direction of detection (C); and
- a force transducer (47) configured to emit a signal indicative of said impact force based on the displacement of said sensitive element (46);
the measurement assembly (1) further comprising:
- a connecting structure (16) comprising a first attachment portion (38) fastened to said support body (45) and a second attachment portion (29) adapted to be coupled in a fixed position with respect to a glass (6) movable along a movement direction (A) towards a closed position in which completely closes a window (5) of a motor vehicle; wherein said first and second attachment portions are mutually spaced along a direction (B) transverse to said direction of detection (C), such that the sensor device (15) is arranged completely out of the path followed by said glass (6) in said window (5); and
- an abutment element (62) adapted to be arranged in a fixed position and aligned with respect to said sensitive element (46) along an impact direction (D) parallel to said direction of detection (C).

3. An assembly according to claim 2, **characterized in that** said sensitive element (46) is defined by a bar perpendicular to said direction of detection (C).

4. An assembly according to claim 2 or 3, **characterized in that** said second attachment portion (29) defines a seat (18) having such shape and orientation that it can be arranged astride an upper end portion (12) of said glass (6); said connecting structure (16) comprising a releasable fastening device (30) for locking, in use, said end portion (12) in said seat (18).

5. An assembly according to claim 4, **characterized in that** said second attachment portion (29) is shaped as an inverted U.

6. An assembly according to claim 4 or 5, **characterized in that** said fastening device (30) is defined by a vice (31) .

7. An assembly according to any one of claims 2 to 6, **characterized in that** said connecting structure (16) comprises adjustment means (40) for adjusting the position of said support body (45) along a direction parallel to said direction of detection (C).

8. An assembly according to claim 7, **characterized in that** said adjustment means (40) comprise:
- at least one guide (41) arranged in a fixed position with respect to one of said second attachment portion (29) and said support body (45); and
- at least one fastening element (43) movable between a locking position and a release position, and slidable along said guide (41), when arranged in the release position, for the adjustment of the position of said support body (45) with respect to said second attachment portion (29).

9. An assembly according to claim 8, **characterized in that** said connecting structure (16) comprises a plate portion (23) fixed with respect to said second attachment portion (29); said guide (41) comprising at least one slot (25) formed in said plate portion (23).

10. An assembly according to any one of claims 2 to 9, **characterized in that** said connecting structure (16) comprises a spacer element (36) arranged between said second attachment portion (29) and said support body (45) and releasably fastened to said second attachment portion (29) and to said support body (45).

11. An assembly according to any one of claims from 2 to 10, **characterized in that** said abutment element (62) has an abutment face (68) adapted to be impacted, in use, by said sensitive element (46) during the translation of said glass (6); said sensitive element (46) being coated by marking material having a different colour from the one of said abutment face (68) and being adapted to leave a coloured mark on said abutment face (68) upon impact between said sensitive element (46) and said abutment element (62).

12. An assembly according to claim 11, **characterized in that** said second attachment portion (29) has a slit (28) aligned with said sensitive element (46) parallel to said direction of detection (C).

## Patentansprüche

1. Testverfahren zum Überprüfen der Einklemmschutzfunktion einer motorisierten Fensterhebervorrichtung (7) eines Kraftfahrzeugs, wobei das Verfahren die folgenden Schritte umfasst:
- Steuern der motorisierten Fensterhebervorrichtung (7), um ein Glas (6) entlang einer Bewegungsrichtung (A) hin in eine geschlossene Position zu bewegen, in der das Glas (6) ein Fenster (5) des Kraftfahrzeugs vollständig schließt, wobei die Fensterhebervorrichtung (7) ausgelegt ist, um die Verschiebungsrichtung automatisch umzukehren, wenn die Bewegung des Glases (6) behindert wird, bevor es die geschlossene Position erreicht;
- Behindern der Verschiebung des Glases (6) hin in die geschlossene Position mittels eines Testhindernisses (62); und
- Messen mittels einer Sensorvorrichtung (15) einer Stoßkraft, die auf das Testhindernis (62) ausgeübt wird, in dem Moment des Umkehrens der Verschiebungsrichtung;
wobei die Sensorvorrichtung (15) an dem Glas (6) befestigt ist und das Testhindernis ein Anschlagelement (62) umfasst, das in einer festen Position angeordnet und in Bezug auf die Sensorvorrichtung (15) entlang einer Stoßrichtung (D) parallel zu der Bewegungsrichtung (A) ausgerichtet ist, sodass es von der Sensorvorrichtung (15) während der Verschiebung des Glases (6) hin in die geschlossene Position gestoßen wird;
**dadurch gekennzeichnet, dass** die Sensorvorrichtung (15) vollständig außerhalb des Wegs angeordnet ist, dem das Glas (6) in dem Fenster (5) folgt.

2. Messanordnung (1) zum Überprüfen der Einklemmschutzfunktion einer motorisierten Fensterhebervorrichtung (7) gemäß dem Testverfahren nach Anspruch 1, wobei die Anordnung eine Sensorvorrichtung (15) umfasst, welche umfasst:
- einen Trägerkörper (45);
- ein empfindliches Element (46), das mit dem Trägerkörper (45) gekoppelt ist, um entlang einer Erfassungsrichtung (C) als Reaktion auf eine Stoßkraft, die auf das empfindliche Element (46) parallel zu der Erfassungsrichtung (C) wirkt, bewegbar zu sein; und
- einen Kraftaufnehmer (47), der eingerichtet ist, um ein Signal zu emittieren, das die Stoßkraft basierend auf der Verschiebung des empfindlichen Elements (46) angibt;
wobei das Messanordnung (1) ferner umfasst:
- eine Verbindungsstruktur (16), die einen ersten Anbringungsabschnitt (38), der an dem Trägerkörper (45) befestigt ist, und einen zweiten Anbringungsabschnitt (29) umfasst, der ausgelegt ist, um in einer festen Position in Bezug auf ein Glas (6) gekoppelt zu sein, das entlang einer Bewegungsrichtung (A) hin in eine geschlossene Position bewegbar ist, in der es ein Fenster (5) eines Kraftfahrzeugs vollständig schließt; wobei der erste und der zweite Anbringungsabschnitt voneinander entlang einer Richtung (B) quer zu der Erfassungsrichtung (C) beabstandet sind, sodass die Sensorvorrichtung (15) vollständig außerhalb des Wegs angeordnet ist, dem das Glas (6) in dem Fenster (5) folgt; und
- ein Anschlagelement (62), das ausgelegt ist, um in einer festen Position angeordnet und in Bezug auf das empfindliche Element (46) entlang einer Stoßrichtung (D) parallel zu der Erfassungsrichtung (C) ausgerichtet ist.

3. Anordnung nach Anspruch 2, **dadurch gekennzeichnet, dass** das empfindliche Element (46) durch eine Stange senkrecht zu der Erfassungsrichtung (C) definiert ist.

4. Anordnung nach Anspruch 2 oder 3, **dadurch gekennzeichnet, dass** der zweite Anbringungsabschnitt (29) einen Sitz (18) definiert, der eine derartige Form und Ausrichtung aufweist, dass er rittlings auf einem oberen Endabschnitt (12) des Glases (6) angeordnet sein kann; wobei die Verbindungsstruktur (16) eine lösbare Befestigungsvorrichtung (30) zum Verriegeln bei Gebrauch des Endabschnitts (12) in dem Sitz (18) umfasst.

5. Anordnung nach Anspruch 4, **dadurch gekennzeichnet, dass** der zweite Anbringungsabschnitt (29) wie ein umgekehrtes U geformt ist.

6. Anordnung nach Anspruch 4 oder 5, **dadurch gekennzeichnet, dass** die Befestigungsvorrichtung (30) durch eine Schraubzwinge (31) definiert ist.

7. Anordnung nach einem der Ansprüche 2 bis 6, **dadurch gekennzeichnet, dass** die Verbindungsstruktur (16) Einstellmittel (40) zum Einstellen der Position des Trägerkörpers (45) entlang einer Richtung parallel zu der Erfassungsrichtung (C) umfasst.

8. Anordnung nach Anspruch 7, **dadurch gekennzeichnet, dass** die Einstellmittel (40) umfassen:
- mindestens eine Führung (41), die in einer festen Position in Bezug auf einen von dem zweiten Anbringungsabschnitt (29) und dem Trägerkörper (45) angeordnet ist; und
- mindestens ein Befestigungselement (43), das zwischen einer Verriegelungsposition und einer Freigabeposition bewegbar ist und entlang der Führung (41) für die Einstellung der Position des Trägerkörpers (45) in Bezug auf den zweiten Anbringungsabschnitt (29) verschiebbar ist, wenn es in der Freigabeposition angeordnet ist.

9. Anordnung nach Anspruch 8, **dadurch gekennzeichnet, dass** die Verbindungsstruktur (16) einen Plattenabschnitt (23) umfasst, der in Bezug auf den zweiten Anbringungsabschnitt (29) fest ist; wobei die Führung (41) mindestens einen Schlitz (25) umfasst, der in dem Plattenabschnitt (23) gebildet ist.

10. Anordnung nach einem der Ansprüche 2 bis 9, **dadurch gekennzeichnet, dass** die Verbindungsstruktur (16) ein Abstandshalterelement (36) umfasst, das zwischen dem zweiten Anbringungsabschnitt (29) und dem Trägerkörper (45) angeordnet und an dem zweiten Anbringungsabschnitt (29) und an dem Trägerkörper (45) lösbar befestigt ist.

11. Anordnung nach einem der Ansprüche 2 bis 10, **dadurch gekennzeichnet, dass** das Anschlagelement (62) eine Anschlagfläche (68) aufweist, die ausgelegt ist, um bei Gebrauch von dem empfindlichen Element (46) während der Verschiebung des Glases (6) gestoßen zu werden; wobei das empfindliche Element (46) mit Markierungsmaterial beschichtet ist, das eine andere Farbe als die der Anschlagfläche (68) aufweist und ausgelegt ist, um bei einem Stoß zwischen dem empfindlichen Element (46) und dem Anschlagelement (62) eine farbige Markierung auf der Anschlagfläche (68) zu hinterlassen.

12. Anordnung nach Anspruch 11, **dadurch gekennzeichnet, dass** der zweite Anbringungsabschnitt (29) einen Schlitz (28) aufweist, der mit dem empfindlichen Element (46) parallel zu der Erfassungsrichtung (C) ausgerichtet ist.

## Revendications

1. Procédé de test pour vérifier la fonction anti-pincement d'un dispositif de levage (7) de fenêtre motorisé d'un véhicule à moteur, le procédé comprenant les étapes suivantes :
- commander ledit dispositif de levage (7) de fenêtre motorisé pour déplacer une vitre (6) le long d'une direction de déplacement (A) vers une position fermée, dans laquelle ladite vitre (6) ferme complètement une fenêtre (5) dudit véhicule à moteur, ledit dispositif de levage (7) de fenêtre étant adapté pour inverser automatiquement la direction de translation lorsque le déplacement de ladite vitre (6) est entravé avant qu'elle n'atteigne ladite position fermée ;
- empêcher la translation de ladite vitre (6) vers ladite position fermée à l'aide d'un obstacle de test (62) ; et
- mesurer à l'aide d'un dispositif de détection (15) une force d'impact exercée sur ledit obstacle de test (62) au moment de l'inversion de la direction de translation ;
dans lequel ledit dispositif de détection (15) est fixé à ladite vitre (6) et ledit obstacle de test comprend un élément de butée (62), qui est agencé dans une position fixe et est aligné par rapport audit dispositif de détection (15) le long d'une direction d'impact (D) parallèle à ladite direction de déplacement (A) de manière à être touché par ledit dispositif de détection (15) durant la translation de ladite vitre (6) vers ladite position fermée ;
**caractérisé en ce que** ledit dispositif de détection (15) est agencé complètement en dehors du chemin suivi par ladite vitre (6) dans ladite fenêtre (5).

2. Ensemble de mesure (1) pour vérifier la fonction anti-pincement d'un dispositif de levage (7) de fenêtre motorisé selon le procédé de test de la revendication 1, l'ensemble comprenant un dispositif de détection (15) comprenant :
- un corps de support (45) ;
- un élément sensible (46) qui est couplé audit corps de support (45) de manière à être mobile le long d'une direction de détection (C) en réponse à une force d'impact agissant sur ledit élément sensible (46) parallèle à ladite direction de détection (C) ; et
- un transducteur de force (47) configuré pour émettre un signal indicatif de ladite force d'impact sur la base du déplacement dudit élément sensible (46) ;
l'ensemble de mesure (1) comprenant en outre :
- une structure de liaison (16) comprenant une première partie d'attache (38) fixée audit corps de support (45) et une seconde partie d'attache (29) adaptée pour être couplée dans une position fixe par rapport à une vitre (6) mobile le long d'une direction de déplacement (A) vers une position fermée dans laquelle elle ferme complètement une fenêtre (5) d'un véhicule à moteur ; dans lequel lesdites première et seconde parties d'attache sont mutuellement espacées le long d'une direction (B) transversale à ladite direction de détection (C), de telle sorte que le dispositif de détection (15) est agencé complètement en dehors du chemin suivi par ladite vitre (6) dans ladite fenêtre (5) ; et
- un élément de butée (62) adapté pour être agencé dans une position fixe et aligné par rapport audit élément sensible (46) le long d'une direction d'impact (D) parallèle à ladite direction de détection (C).

3. Ensemble selon la revendication 2, **caractérisé en ce que** ledit élément sensible (46) est défini par une barre perpendiculaire à ladite direction de détection (C).

4. Ensemble selon la revendication 2 ou 3, **caractérisé en ce que** ladite seconde partie d'attache (29) définit un siège (18) présentant une forme et une orientation telles qu'il peut être agencé à cheval sur une partie d'extrémité supérieure (12) de ladite vitre (6) ; ladite structure de liaison (16) comprenant un dispositif de fixation libérable (30) pour verrouiller, lors de l'utilisation, ladite partie d'extrémité (12) dans ledit siège (18).

5. Ensemble selon la revendication 4, **caractérisé en ce que** ladite seconde partie d'attache (29) a la forme d'un U inversé.

6. Ensemble selon la revendication 4 ou 5, **caractérisé en ce que** ledit dispositif de fixation (30) est défini par un étau (31).

7. Ensemble selon l'une quelconque des revendications 2 à 6, **caractérisé en ce que** ladite structure de liaison (16) comprend un moyen de réglage (40) pour régler la position dudit corps de support (45) le long d'une direction parallèle à ladite direction de détection (C).

8. Ensemble selon la revendication 7, **caractérisé en ce que** ledit moyen de réglage (40) comprend :
- au moins un guide (41) agencé dans une position fixe par rapport à l'un parmi ladite seconde partie d'attache (29) et ledit corps de support (45) ; et
- au moins un élément de fixation (43) mobile entre une position de verrouillage et une position de libération, et pouvant coulisser le long dudit guide (41), lorsqu'il est agencé dans la position de libération, pour le réglage de la position dudit corps de support (45) par rapport à ladite seconde partie d'attache (29).

9. Ensemble selon la revendication 8, **caractérisé en ce que** ladite structure de liaison (16) comprend une partie plaque (23) fixée par rapport à ladite seconde partie d'attache (29) ; ledit guide (41) comprenant au moins une fente (25) formée dans ladite partie plaque (23).

10. Ensemble selon l'une quelconque des revendications 2 à 9, **caractérisé en ce que** ladite structure de liaison (16) comprend un élément d'espacement (36) agencé entre ladite seconde partie d'attache (29) et ledit corps de support (45) et fixé de manière libérable à ladite seconde partie d'attache (29) et audit corps de support (45).

11. Ensemble selon l'une quelconque des revendications 2 à 10, **caractérisé en ce que** ledit élément de butée (62) présente une face de butée (68) adaptée pour être touchée, lors de l'utilisation, par ledit élément sensible (46) durant la translation de ladite vitre (6) ; ledit élément sensible (46) étant revêtu d'un matériau de marquage présentant une couleur différente de celle de ladite face de butée (68) et étant adapté pour laisser une marque colorée sur ladite face de butée (68) lors de l'impact entre ledit élément sensible (46) et ledit élément de butée (62).

12. Ensemble selon la revendication 11, **caractérisé en ce que** ladite seconde partie d'attache (29) présente une entaille (28) alignée par rapport audit élément sensible (46) parallèle à ladite direction de détection (C).
